# FASCICULE DE BREVET EUROPEEN

(11) **EP 4 556 077 B1**
(45) Date de publication et mention de la délivrance du brevet: **15.07.2026**
(21) Numéro de dépôt: 24211787.7
(22) Date de dépôt: 08.11.2024
(51) Int. Cl.: A62C 2/06, A62C 3/16, H02G 3/08

(54) **ACCESSOIRE COUPE-FEU À INSTALLER DANS UNE BOÎTE D'ENCASTREMENT ET ENSEMBLE COUPE-FEU COMPRENANT UNE BOÎTE D'ENCASTREMENT ET UN TEL ACCESSOIRE COUPE-FEU**
BRANDSCHUTZZUBEHÖR ZUR INSTALLATION IN EINEM EINBAUGEHÄUSE UND BRANDSCHUTZANORDNUNG MIT EINEM EINBAUGEHÄUSE UND EINEM SOLCHEN BRANDSCHUTZZUBEHÖR
FIRE-PROTECTION ACCESSORY TO BE INSTALLED IN A FLUSH MOUNTED BOX AND FIRE-PROTECTION ASSEMBLY COMPRISING A FLUSH MOUNTED BOX AND SUCH A FIRE-PROTECTION ACCESSORY

(30) Priorité: 14.11.2023 FR 2312474
(43) Date de publication de la demande: 21.05.2025
(73) Titulaire: Legrand France, 87000 Limoges (FR); Legrand SNC, 87000 Limoges (FR)
(72) Inventeur: BUISSON, Philippe, 87000 Limoges (FR); LACOSTE, Alain, 87000 Limoges (FR); VIDALINC, Julien, 87000 Limoges (FR)
(74) Mandataire: Jacobacci & Partners France

(56) Documents cités:
- EP-A1- 4 102 120
- DE-A1- 102021 124 092
- GB-A- 2 325 728
- JP-A- 2009 044 848

## Description

La présente invention concerne, de manière générale, le domaine des boîtes d'encastrement pour cloisons sèches pour la réception d'appareillages électriques.

L'invention concerne plus particulièrement un accessoire coupe-feu à installer dans une boîte d'encastrement.

Elle concerne également un ensemble coupe-feu comprenant une boîte d'encastrement et cet accessoire coupe-feu.

Les normes actuelles imposent de redonner sa performance coupe-feu d'origine à une cloison sèche qui a été percée de l'orifice nécessaire à la mise en place d'une boîte d'encastrement, c'est-à-dire empêcher le feu de traverser la cloison sèche pendant une durée prédéfinie (par exemple 30 ou 60 minutes).

Pour respecter ces normes, il est connu de placer à l'intérieur de la boîte d'encastrement un matériau intumescent qui peut se présenter sous la forme d'un patch. Lorsque le matériau intumescent est exposé à la chaleur, il gonfle et obstrue alors les ouvertures d'entrée de gaine de la boîte, ce qui permet de chasser l'air et d'empêcher le passage des flammes et des gaz au travers de celles-ci.

On connaît déjà du document EP1221749 une boîte d'encastrement telle que précité dans laquelle le matériau intumescent se présente sous la forme d'une couche disposée contre la paroi de fond de la boîte.

L'inconvénient de cette solution est que le matériau intumescent occupe une partie du volume intérieur de la boîte d'encastrement utile pour la réception de socles de mécanismes d'appareillages électriques et de leur câblage.

Par ailleurs, on connaît du document JP2009/044848, une boîte d'encastrement comprenant une gaine longiligne conique qui est retenue sur une ouverture d'entrée de la boîte et qui est réalisée dans un matériau se dilatant à la chaleur. On connait enfin du document EP4102120 un boîtier électrique pour véhicule automobile comprenant une ouverture pourvue d'un peigne en matériau intumescent

Par rapport à l'état de la technique précité, la présente invention propose de déporter le matériau intumescent hors du volume intérieur de la boîte d'encastrement pour augmenter le volume disponible au montage des éléments électriques des appareillages électriques.

Plus particulièrement, selon l'invention, il est proposé un accessoire coupe-feu selon la revendication 1.

Grâce à l'accessoire coupe-feu conforme à l'invention, le matériau intumescent est situé en dehors du volume intérieur de la boîte d'encastrement. En effet, l'élément allongé est rapporté dans la boîte d'encastrement de manière à faire majoritairement saillie à l'extérieur de celle-ci, ce qui augmente artificiellement le volume intérieur de la boîte d'encastrement. Le matériau intumescent ne génère alors que peu, voire aucun, encombrement dans la boîte d'encastrement.

De plus, cet accessoire coupe-feu permet de rendre coupe-feu une boîte d'encastrement conventionnelle, en se montant dans une de ses ouvertures non utilisées pour le passage d'une gaine électrique.

D'autres caractéristiques de l'accessoire coupe-feu conforme à l'invention sont énoncées dans les revendications 2 à 11.

L'invention propose également un ensemble coupe-feu d'installation d'un appareillage électrique comprenant :
- une boîte d'encastrement comprenant une paroi délimitant un volume intérieur de la boîte d'encastrement, la paroi présentant au moins une ouverture de passage de gaine électrique, et
- un accessoire coupe-feu tel que précité accueilli dans l'ouverture de passage.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique éclatée en perspective d'un ensemble coupe-feu selon l'invention,
- la figure 2 est une vue schématique assemblée en perspective de l'accessoire coupe-feu de l'ensemble coupe-feu de la figure 1,
- la figure 3 est une vue schématique assemblée arrière en perspective de l'ensemble coupe-feu de la figure 1,
- la figure 4 est une vue schématique avant de l'ensemble coupe-feu de la figure 3, et
- la figure 5 est une vue schématique en coupe selon le plan A-A de la figure 4.

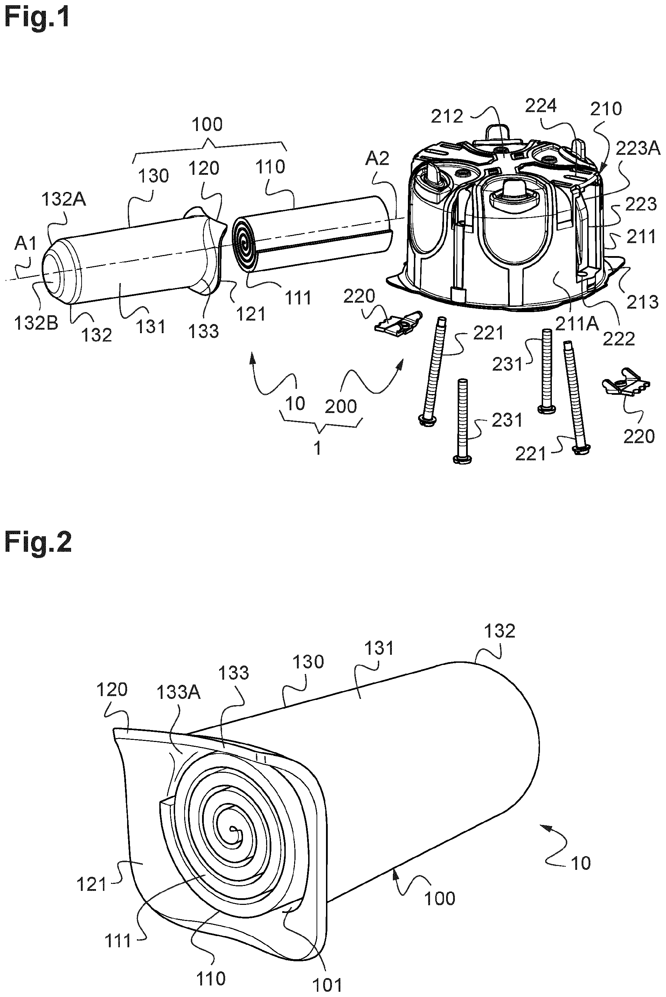

Sur la figure 1, on a représenté un ensemble coupe-feu 1 d'installation d'un appareillage électrique conforme à l'invention. Cet ensemble coupe-feu 1 est prévu pour être encastré dans une cavité pratiquée dans une paroi (non représentée) de telle manière qu'une partie de cet ensemble coupe-feu 1 soit accessible à l'avant de cette paroi pour y installer un appareillage électrique afin d'assurer une fonction électrique donnée.

Cette paroi (non représentée) est ici une cloison sèche.

On rappelle à ce sujet que, de manière connue, une telle cloison sèche, aussi appelée cloison creuse, est généralement composée d'une ossature métallique (formée de montants verticaux et/ou de rails horizontaux) et de panneaux de plâtre rapportés sur l'une au moins des deux faces de l'ossature métallique. La cavité pratiquée dans cette cloison sèche pour accueillir l'ensemble coupe-feu 1 est alors simplement formée par une ouverture circulaire réalisée à la scie cloche dans l'un des panneaux de plâtre.

Dans la description, les termes « avant » et « arrière » seront utilisés par rapport à la direction du regard de l'installateur de l'ensemble coupe-feu 1 dans le panneau de plâtre. Ainsi, les termes avant et arrière désigneront respectivement le lieu tourné vers l'extérieur de la cloison sèche et le lieu tourné vers l'intérieur de cette cloison sèche. Les termes « intérieur » ou « interne » désigneront quant à eux le lieu tourné vers le centre de l'ensemble coupe-feu 1 et les termes « extérieur » ou « externe » le lieu opposé.

En outre, l'appareillage électrique (non représenté) à rapporter dans l'ensemble coupe-feu 1, comporte, pour l'essentiel, classiquement, un support d'appareillage et un mécanisme d'appareillage monté dans le support d'appareillage. Le mécanisme d'appareillage comprend un socle rapporté sur le support d'appareillage et logeant les éléments électriques adaptés à être connectés au réseau électrique, ainsi qu'un enjoliveur donnant accès aux éléments électriques pour assurer la fonction électrique de l'appareillage électrique (par exemple une fonction d'interrupteur, de va-et-vient, de variateur électrique, de prise réseau, de détecteur de fumé, etc...).

Comme le montre la figure 1, l'ensemble coupe-feu 1 comprend un accessoire coupe-feu 10 et une boîte d'encastrement 200.

La boîte d'encastrement 200 est tout à fait classique, elle sert à la protection, à la fixation et au câblage de l'appareillage électrique. Le volume intérieur 201 de la boîte d'encastrement 200 permet de loger le socle du mécanisme d'appareillage et d'y réaliser son câblage. L'accessoire coupe-feu 10 permet quant à lui de rendre son caractère coupe-feu à la cloison sèche. Il constitue ainsi une protection passive contre l'incendie.

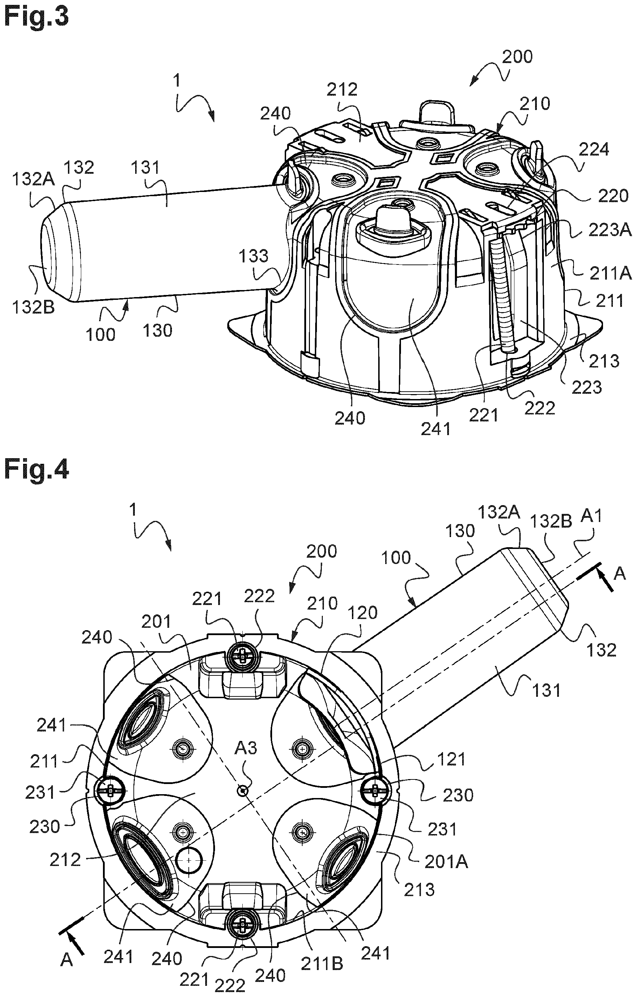

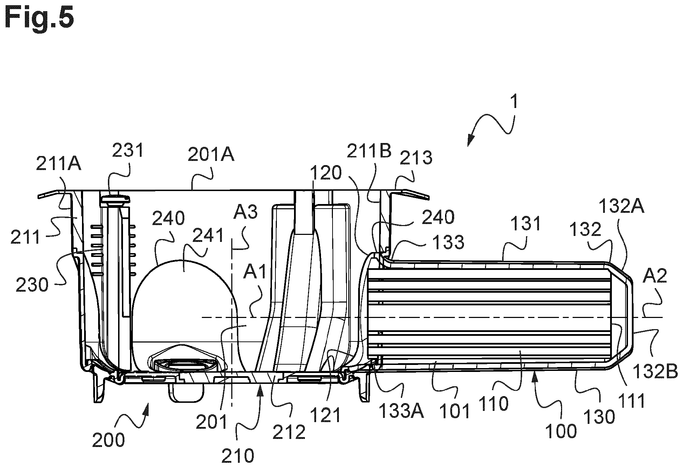

Pour l'essentiel, la boîte d'encastrement 200 comprend un corps 210 qui présente ici une forme générale cylindrique autour d'un axe central A3 (voir figures 4 et 5), mais qui pourrait bien entendu présenter une forme différente, notamment parallélépipédique.

Comme le montrent les figures 1, 3, 4 et 5, le corps 210 de la boîte d'encastrement 200 comporte une paroi latérale 211 globalement tubulaire de révolution et une paroi de fond 212 qui ferme la boîte d'encastrement 200 à l'arrière. La boîte d'encastrement 200 est ouverte à l'avant par une ouverture avant 201A opposée à la paroi de fond 212. Le corps 210 délimite ainsi, entre la paroi latérale 211, la paroi de fond 212 et l'ouverture avant 201A, le volume intérieur 201 (voir la figure 4) de la boîte d'encastrement 200 qui permet notamment d'accueillir le socle de l'appareillage électrique ainsi que les fils électriques provenant du réseau, nécessaires à son câblage.

Pour sa fixation dans l'ouverture circulaire pratiquée dans le panneau de plâtre de la cloison sèche, le corps 210 de la boîte d'encastrement 200 comporte un trottoir extérieur 213 qui longe extérieurement le bord de l'ouverture avant 201A et qui est adapté à prendre appui contre la face avant du panneau de plâtre, tout autour de l'ouverture circulaire. Ce trottoir extérieur 213 permet de bloquer le corps 210 de la boîte d'encastrement 200 vers l'arrière dans la cloison sèche.

Comme le montrent plus particulièrement les figures 1, 3 et 4, pour bloquer le corps 210 vers l'avant dans la cloison sèche, la boîte d'encastrement 200 est équipée de deux vis 221 et griffes 220 qui interviennent en position diamétralement opposée sur la face externe 211A de la paroi latérale 211. Chaque vis 221, à l'extrémité libre de laquelle est vissée une griffe 220, traverse des aménagements prévus dans la paroi latérale 211, à savoir une cheminée 222 débouchant à l'avant de la boîte d'encastrement 200 et maintenant la tête de ladite vis 221 de sorte que ladite vis est seulement libre en rotation autour de son axe (et donc bloquée en translation), un renfoncement 223 de la face externe 211A de la paroi latérale 211, et un orifice 224 opposé au débouché de ladite cheminée dans le renfoncement 223. Il est prévu une rampe 223A au fond de chaque renfoncement 223, dont une partie est inclinée. Une fois mise en place, chaque griffe 220 est partiellement logée dans un renfoncement 223 en appui contre la rampe 223A. Chaque griffe 220 est bloquée en rotation dans le renfoncement 223 tandis que chaque vis 221, libre en rotation autour de l'axe de son corps fileté, est fixe en translation. Le montage est classiquement ainsi fait que la rotation de chaque vis 221 dans la cheminée 222 entraîne un déplacement en translation de la griffe 220 correspondante le long du corps fileté de la vis 221. Lors de son déplacement chaque griffe 220 glisse sur la rampe 223A prévue au fond du renfoncement 223 pour sortir hors du renfoncement 223, en saillie de la face externe 211A de la paroi latérale 211 de la boîte d'encastrement 200, et venir se plaquer ou s'accrocher sur la face arrière du panneau de plâtre de la cloison sèche.

Comme le montre plus particulièrement la figure 4, pour la fixation du support d'appareillage de l'appareillage électrique à la boîte d'encastrement 200, la paroi latérale 211 du corps 210 de la boîte d'encastrement 200 porte sur sa face interne 211B deux puits de vissage 230 diamétralement opposés, dans lesquels sont vissées deux vis 231 destinées à être engagées au travers d'orifices, par exemple en forme de trou de serrure, prévus dans le support d'appareillage.

Les puits de vissage 230 et les aménagements pour les vis 221 de griffe sont placés aux quatre points cardinaux du cercle que suit ici le bord de l'ouverture avant 201A de la boîte d'encastrement 200.

La boîte d'encastrement 200 comporte par ailleurs une pluralité d'entrées de gaines de cheminement de câbles. Une telle gaine (non représentée) loge les câbles et/ou les fils électriques issus du réseau électrique local. Telle que représentée sur les figures, la boîte d'encastrement 200 comporte quatre entrées de gaine de cheminement de câble. Chaque entrée est une ouverture de passage 240 s'étendant en partie sur la paroi latérale 211 du corps 210 de la boîte d'encastrement 200 et en partie sur la paroi de fond 212 du corps 210 de la boîte d'encastrement 200. Le contour de chaque ouverture de passage 240 est globalement oblong.

Chaque ouverture de passage 240 est fermée par un opercule 241 déchirable ou transperçable. Cet opercule 241 est ici constitué par une membrane souple (du type de celles commercialisées par les demanderesses sous la référence « Batibox^{™} »).

Le corps 210 est réalisé en matériau plastique rigide (typiquement en polypropylène). Les membranes souples sont réalisées en un matériau thermoplastique plus souple (typiquement en SEBS acronyme de Styrène Ethylène Butylène Styrène) surmoulé sur le matériau rigide.

De manière remarquable, comme le montre bien la figure 2, l'accessoire coupe-feu 10 comprend un élément allongé 100 pourvu d'un matériau intumescent 110. Tel que cela est représenté sur les figures 3 à 5, avantageusement, l'élément allongé 100 est adapté à être enfilé au travers d'une des ouvertures de passage 240 de la boîte d'encastrement 200 et comporte des moyens de retenue 120 aptes à coopérer avec une partie interne de la boîte d'encastrement 200 pour fixer l'élément allongé 100 à la boîte d'encastrement 200 de telle manière que l'élément allongé 100 s'étend majoritairement à l'extérieur de celle-ci.

Comme le montre la figure 1, l'élément allongé 100 comprend un étui 130 creux se présentant sous la forme d'un fourreau et logeant le matériau intumescent 110. Cette forme creuse définit un logement d'accueil 101 pour le matériau intumescent 110. Par forme de fourreau, on entend que l'étui 130 présente une portion longitudinale 131 avec une extrémité fermée 132 et une extrémité ouverte 133 opposée, l'extrémité ouverte 133 présentant ici une seule ouverture de sortie 133A (voir figure 2).

Tel que représenté sur la figure 1, l'étui 130 et le matériau intumescent 100 sont ainsi deux éléments distincts. Le matériau intumescent 100 est rapporté dans l'étui 130, l'étui 130 étant rigide.

La portion longitudinale 131 est ici allongée selon un axe longitudinal A1 (visible sur les figures 1, 4 et 5) et présente donc une forme droite. Elle présente plus spécifiquement une forme tubulaire de révolution centrée sur l'axe longitudinal A1. En variante, la portion longitudinale pourrait être allongée de manière courbée.

La portion longitudinale 131 de l'étui 130 est ici très légèrement effilée en ce sens que les sections transversales, définies comme des sections pratiquées dans des plans orthogonaux à l'axe longitudinal A1, sont décroissantes depuis l'extrémité ouverte 133 de l'étui 130 jusqu'à l'extrémité fermée 132 de l'étui 130. Tel que représenté sur les figures 1 à 5, les sections transversales de ladite portion longitudinale 131 sont continument et régulièrement décroissantes de l'extrémité ouverte 133 à l'extrémité fermée 132 de l'étui 130. En variante, la portion longitudinale pourrait être cylindrique, par exemple de révolution.

L'ouverture de sortie 133A de l'extrémité ouverte 133 de l'étui 130 est ici globalement circulaire et centrée sur l'axe longitudinal A1. L'ouverture de sortie 133A présente des dimensions sensiblement égales à celle de l'intérieur de la portion longitudinale 131, c'est-à-dire ici à un diamètre interne de la portion longitudinale 131, au niveau de l'extrémité ouverte 133. L'ouverture de sortie 133A est ici formée dans la continuité du logement d'accueil 101 de l'étui 130. Comme représenté sur la figure 2, les dimensions de l'ouverture de sortie 133A sont ainsi adaptées à placer le matériau intumescent 110 dans l'étui 130.

La portion longitudinale 131 de l'étui 130 est adaptée à être enfilée au travers de l'une des ouvertures de passage 240 prévues dans la boîte d'encastrement 200 en ce sens que, d'une part, ses sections transversales présentent une taille inférieure ou égale à celle de l'ouverture de passage 240, et, d'autre part, l'étui 130 présente une longueur telle que la portion longitudinale 131 peut être engagée dans l'ouverture de passage 240 par l'intérieur de la boîte d'encastrement 200.

Ici, comme le montre bien la figure 5, la portion longitudinale 131 de l'étui 130 présente, au niveau de l'extrémité ouverte 133 de l'étui 130, une section de taille identique, au jeu de montage près, à celle de la partie de l'ouverture de passage 240 pratiquée dans la paroi latérale 211 du corps 210 de la boîte d'encastrement 200. L'accessoire coupe-feu 10 est donc adapté à se placer dans cette partie de l'ouverture de passage 240 pour l'obturer.

Comme le montre la figure 1, l'extrémité fermée 132 de l'étui 130 présente ici une paroi biseautée 132A qui s'étend plus spécifiquement selon une surface tronconique autour de l'axe longitudinal A1. La paroi biseautée 132A relie la portion longitudinale 131 de l'étui 130 à une face circulaire 132B de l'extrémité fermée 132. La surface de la face circulaire 132B de l'extrémité fermée 132 est inférieure à la surface de l'ouverture de sortie 133A. L'étui 130 présente ainsi, au niveau de son extrémité fermée 132, une forme effilée qui facilite son engagement dans l'ouverture de passage 240 de la boîte d'encastrement 200.

L'étui 130 porte les moyens de retenue 120 du côté de l'extrémité ouverte 133, plus spécifiquement autour de l'ouverture de sortie 133A. Les moyens de retenue 120 s'étendent ainsi en saillie de la portion longitudinale 131 de l'étui 130. Ici, les moyens de retenue 120 s'étendent globalement radialement par rapport à l'axe longitudinal A1.

En l'espèce, comme le montrent les figures 1 et 2, les moyens de retenue 120 comportent une butée d'arrêt se présentant sous la forme d'une collerette d'arrêt 121. La collerette d'arrêt 121 est adaptée à venir en appui contre le corps 210 de la boîte d'encastrement 200 autour du bord de l'ouverture de passage 240. Comme le montre la figure 5, la collerette d'arrêt 121 présente ainsi une taille supérieure à celle de l'ouverture de passage 240. Ici, la collerette d'arrêt 121 borde l'ouverture de sortie 133A de l'extrémité ouverte 133 de l'étui 130, ce qui signifie qu'elle entoure l'extrémité ouverte 133. En variante, la collerette pourrait être positionnée en retrait de l'ouverture de sortie.

La collerette d'arrêt 121 présente ici une forme évasée, visible en particulier sur la figure 2. Ainsi, comme le montre la figure 5, la collerette d'arrêt 121 ne s'étend pas ici dans un plan mais est légèrement incurvée de manière à épouser la forme de la face interne 211B de la paroi latérale 211 du corps 210 de la boîte d'encastrement 200.

L'étui 130 et les moyens de retenue 120 sont réalisés par moulage d'une seule pièce en matière isolante, ici en ABS (acrylonitrile butadiène styrène).

Comme le montre la figure 1, le matériau intumescent 110 se présente ici sous la forme d'une feuille ou d'une bande roulée logée dans l'étui 130. Cette feuille ou bande est ici roulée autour d'un axe d'enroulement A2 qui s'étend parallèlement à l'axe longitudinal A1. Le matériau intumescent 110 a ainsi la forme d'un cylindre de révolution dont les bases 111, c'est-à-dire ses faces d'extrémité en forme globale de disque, présentent un diamètre inférieur ou égal à celui de la section transversale interne de la portion longitudinale 131 de l'étui 130. Le matériau intumescent 110 peut typiquement être roulé de façon serrée et maintenu comme tel pour être inséré dans l'étui 130. Une fois mis en place, il peut alors se dérouler légèrement pour épouser la surface interne de l'étui 130.

En variante, le matériau intumescent pourrait se présenter sous toute autre forme adaptée à l'étui, par exemple sous la forme d'un bâtonnet ou encore d'une mousse injectée dans l'étui. Le matériau intumescent pourrait aussi, sous forme liquide, être injecté ou versé dans l'étui, pour ensuite se solidifier dans l'étui. En d'autres termes, le matériau intumescent pourrait ainsi être moulé dans l'étui. Le matériau intumescent serait alors monobloc et épouserait au moins en partie la surface interne de l'étui 130.

Le matériau intumescent utilisé peut être un matériau composite comprenant une matrice polymère, incorporant :
- un acide (acide borique, acide phosphorique, acide sulfurique) ou une source d'acide organique (phosphates d'urée, phosphates de mélamine) ou inorganique (borates d'ammonium, phosphate d'ammonium, phosphate de diammonium, polyphosphate d'ammonium, sulfate d'ammonium) ;
- un composé source de carbone, généralement un polyalcool susceptible de se déshydrater tel que le pentaérythritol, un sucre simple (arabinose, maltose) ou un polysaccharide (cellulose, amidon) ; et
- un agent gonflant générant des gaz non combustibles sous l'effet de la chaleur tel que la mélamine (NH3, H2O, CO2), la guanidine (NH3, H2O, CO2) ou l'urée (NH3, H2O, CO2).

Un tel matériau peut incorporer du graphite en tant que charge minérale et des fibres coupées ou non liées.

Comme cela apparaît sur la figure 5, le matériau intumescent 110 occupe ici presque tout le volume interne de l'étui 130. Il occupe notamment toute la partie longitudinale 131, s'arrêtant à l'extrémité fermée 132 au niveau de la paroi biseautée 132A, et dépassant légèrement dans l'ouverture de sortie 133A de l'extrémité ouverte 133.

Toutefois, il peut bien entendu être prévu que le matériau intumescent 110 occupe seulement une partie du volume interne de l'étui 130, ce qui permet de ménager un espace de rangement au sein de ce dernier. Cet espace de rangement peut par exemple s'étendre le long de l'axe longitudinal A1 et être obtenu par un déroulement du matériau intumescent 110 après son insertion dans l'étui 130. Le matériau intumescent 110 peut aussi être plus court, selon l'axe longitudinal A1, que la partie longitudinale 131, ce qui génère aussi un espace de rangement. Il est alors de préférence poussé au fond de l'étui 130 contre l'extrémité fermée 132. Dans tous les cas, cet espace de rangement peut servir à réaliser des fonctions électriques, comme y placer une borne de raccordement électrique, un serre-fils, ou bien des différents types de capteurs par exemple de températures, de sons, de fumés, etc...

L'accessoire coupe-feu 10 monté dans la boîte d'encastrement 200 est représenté sur les figures 3 à 5.

Comme le montre la figure 4, l'élément allongé 100 s'étend alors sensiblement radialement par rapport au corps 210 cylindrique de la boîte d'encastrement 200. Ici, cela signifie que l'axe longitudinal A1, selon lequel s'étend la portion longitudinale 131 de l'étui 130, est perpendiculaire à l'axe central A3 du corps 210 de la boîte d'encastrement 200. Ainsi, tel que cela est visible sur les figures 3 et 5, la portion longitudinale 131 de l'étui 130 s'étend ici sensiblement parallèlement à la paroi de fond 212 du corps 210 de la boîte d'encastrement 200.

La collerette d'arrêt 121 est en appui contre la paroi latérale 211 du corps 210 de la boîte d'encastrement 200, et plus spécifiquement contre la face interne 211B de cette paroi latérale 211. Elle est aussi en appui contre la paroi de fond 212 du corps 210 de la boîte d'encastrement 200 et une partie de l'opercule 241 qui obture la partie de l'ouverture de passage 240 s'étendant sur la paroi de fond 212 du corps 210 de la boîte d'encastrement 200.

Comme le montre bien la figure 5, l'accessoire coupe-feu 10 est monté dans la boîte d'encastrement 200 de telle sorte que l'étui 130 s'étend largement à l'extérieur de la boîte d'encastrement 200. En effet, seule l'extrémité ouverte 133 de l'étui 130 s'étend dans l'ouverture de passage 240, la portion longitudinale 131 s'étendant quant à elle en saillie de la paroi latérale 211 du corps 210 de la boîte d'encastrement 200 et à l'opposé de cette dernière. Ainsi, plus de 90 %, et de préférence plus de 95 %, du volume du matériau intumescent 110 est positionné à l'extérieur de la boîte d'encastrement 200, c'est-à-dire hors de son volume intérieur 201.

L'ouverture de sortie 133A de l'étui 130 débouche dans le volume intérieur 201 de la boîte d'encastrement 200. Ici, l'ouverture de sortie 133A de l'étui 130 débouche même entièrement dans le volume intérieur 201 de la boîte d'encastrement 200.

En cas d'incendie, lorsque le matériau intumescent 110 est exposé à la chaleur et gonfle, celui-ci se déverse dans la boîte d'encastrement 200 et la remplit, ce qui permet notamment de boucher les ouvertures de passage 240 et/ou l'ouverture avant 201A de la boîte d'encadrement 200, et ainsi d'empêcher le passage des flammes et des gaz dans l'ouverture circulaire pratiquée dans le panneau de plâtre. L'ouverture de sortie 133A de l'étui 130 est donc conçue pour le passage du matériau intumescent 110 vers la boîte d'encastrement 200 lorsque le matériau intumescent 110 est exposé à la chaleur. Ici, comme évoqué précédemment, l'ouverture de sortie 133A permet aussi le passage du matériau intumescent 110 dans son état initial (non expansé par la chaleur) afin de le positionner dans l'étui 130.

La mise en place de l'ensemble coupe-feu 1 est opérée de la manière suivante.

L'installateur commence par ouvrir au moins deux ouvertures de passage 240 dans le corps 210 de la boîte d'encastrement 200, en dégageant deux opercules 241.

L'installateur tire ensuite une gaine de cheminement de câbles au travers de l'autre ouverture de passage 240, de manière à tirer les fils électriques issus du réseau électrique local à l'intérieur de la boîte d'encastrement 200. Ces fils électriques serviront à connecter les éléments électriques de l'appareillage électrique.

Il engage alors et fixe à l'aide du système de vis de griffe 220, 221 la boîte d'encastrement 200 dans l'ouverture circulaire pratiquée dans le panneau de plâtre.

L'accessoire coupe-feu 10 est enfin engagé par l'intérieur de la boîte d'encastrement 200 au travers de l'une des ouvertures de passage 240. Pour cela, l'extrémité fermée 132 de l'étui 130 est engagée la première, puis la partie longitudinale 131 est engagée jusqu'à la collerette d'arrêt 121. La partie longitudinale 131 est typiquement engagée de manière oblique dans un premier temps avant d'être redressée dans un second temps pour s'étendre radialement, tel que représenté sur les figures 3 à 5.

Ainsi l'ensemble coupe-feu 1 est-il prêt à être utilisé pour installer l'appareillage électrique.

La présente invention n'est nullement limitée au mode de réalisation décrit et représenté, mais l'homme du métier saura y apporter toute variante conforme aux revendications annexées.

On pourrait notamment prévoir de remplacer la collerette d'arrêt de l'étui par de simples ergots en saillie de la portion longitudinale de l'étui. Ces ergots seront alors préférentiellement situés au bord de l'extrémité ouverte de l'étui. En variante, ils pourront également être situés à distance de ce dernier, de préférence à moins d'un centimètre de ce bord.

Encore en variante, on pourrait prévoir que l'étui soit formé de deux parties distinctes, dont l'une pourrait par exemple constituer la portion longitudinale de l'étui et dont l'autre pourrait par exemple constituer la collerette d'arrêt à encliqueter sur ladite portion longitudinale.

L'étui pourrait présenter des sections transversales non-circulaires, par exemple rectangulaires, carrées, triangulaires, hexagonales, etc...

L'étui pourrait aussi être partiellement, ou entièrement, réalisé dans le matériau intumescent. L'élément allongé pourrait même être réalisé d'un seul tenant en matériau intumescent. Il pourrait alors se présenter sous la forme d'un bâtonnet muni des moyens de retenue pourvus à une extrémité du bâtonnet.

L'ouverture de sortie de l'étui pourrait présenter des dimensions inférieures aux sections transverses de la portion longitudinale, notamment au niveau de l'extrémité ouverte. Cela permettrait par exemple de retenir le matériau intumescent dans l'étui après son insertion.

L'extrémité ouverte de l'étui pourrait aussi présenter plusieurs ouvertures de sortie, par exemple une pluralité d'orifices de petites sections (largement inférieures aux sections transverses de la portion longitudinale). Ces orifices pourraient être disposés sur la circonférence de la portion longitudinale ou encore sur une surface d'extrémité transverse à la portion longitudinale (faisant alors face à la face circulaire de l'extrémité fermée). De préférence, toutes les ouvertures de sortie débouchent dans la boîte d'encastrement pour y canaliser le matériau intumescent lors de son expansion.

## Revendications

1. Accessoire coupe-feu (10) pour une boîte d'encastrement (200) comprenant un élément allongé (100) pourvu d'un matériau intumescent (110), l'élément allongé (100) étant adapté à être enfilé au travers d'une ouverture de passage (240) de gaine électrique de la boîte d'encastrement (200) et comportant des moyens de retenue (120) aptes à coopérer avec une partie interne de la boîte d'encastrement (200) pour fixer l'élément allongé (100) à la boîte d'encastrement (200) de telle manière que l'élément allongé (100) s'étend majoritairement à l'extérieur de celle-ci, l'élément allongé (100) comprenant un étui (130) creux portant les moyens de retenue (120), dans lequel l'étui (130) creux loge le matériau intumescent (110), l'étui (130) présentant au moins une ouverture de sortie (133A) pour le passage du matériau intumescent (110) vers la boîte d'encastrement (200) lorsque le matériau intumescent (110) est exposé à la chaleur.

2. Accessoire coupe-feu (10) selon la revendication 1, dans lequel les moyens de retenue (120) s'étendent en saillie de l'étui (130) du côté de chaque ouverture de sortie (133A).

3. Accessoire coupe-feu (10) selon l'une des revendications 1 et 2, dans lequel l'étui (130) se présente sous la forme d'un fourreau comportant une seule ouverture de sortie (133A).

4. Accessoire coupe-feu (10) selon la revendication 3, dans lequel les moyens de retenue (120) comprennent une collerette d'arrêt (121) bordant ladite ouverture de sortie (133A).

5. Accessoire coupe-feu (10) selon l'une des revendications 1 à 4, dans lequel le matériau intumescent (110) se présente sous la forme d'une feuille ou d'une bande roulée logée dans l'étui (130).

6. Accessoire coupe-feu (10) selon l'une des revendications 1 à 4, dans lequel le matériau intumescent (110) est moulé dans l'étui (130).

7. Accessoire coupe-feu (10) selon l'une des revendications 1 à 6, dans lequel le matériau intumescent (110) occupe seulement une partie du volume interne de l'étui (130) pour ménager un espace de rangement.

8. Accessoire coupe-feu (10) selon l'une des revendications précédentes, dans lequel l'étui (130) est réalisé en matériau intumescent (110).

9. Accessoire coupe-feu (10) selon l'une des revendications précédentes, dans lequel il est prévu que l'élément allongé (100) se fixe à la boîte d'encastrement (200) de telle sorte que plus de 90 % du volume du matériau intumescent (110) est positionné à l'extérieur de la boîte d'encastrement (200).

10. Accessoire coupe-feu (10) selon l'une des revendications précédentes, dans lequel l'élément allongé (100) s'étend rectilignement ou en courbe.

11. Accessoire coupe-feu (10) selon l'une des revendications précédentes, dans lequel l'élément allongé (100) comprend une portion longitudinale (131) présentant une forme tubulaire de révolution.

12. Ensemble coupe-feu (10) d'installation d'un appareillage électrique comprenant :
- une boîte d'encastrement (200) comprenant une paroi (211, 212) délimitant un volume intérieur (201) de la boîte d'encastrement (200), la paroi (211, 212) présentant au moins une ouverture de passage (240) de gain électrique, et
- un accessoire coupe-feu (10) selon l'une des revendications 1 à 11 accueilli dans l'ouverture de passage (240).

## Patentansprüche

1. Brandschutzzubehör (10) für ein Einbaugehäuse (200) mit einem länglichen Element (100), das mit einem anschwellenden Material 110) versehen ist, wobei das längliche Element (100) dazu ausgelegt ist, durch eine Durchgangsöffnung (240) für einen elektrischen Kabelschlauch in das Einbaugehäuse (200) eingeführt zu werden, und Rückhaltemittel (120) aufweist, die geeignet sind, mit einem inneren Teil des Einbaugehäuses (200) zusammenzuwirken, um das längliche Element (100) an dem Einbaugehäuse (200) so zu befestigen, daß sich das längliche Element (100) im Wesentlichen außerhalb desselben erstreckt,
wobei das längliche Element (100) eine hohle Hülle (130) aufweist, die die Rückhaltemittel (120) trägt,
bei dem die hohle Hülle (130) das anschwellende Material (110) enthält, wobei die Hülle (130) mindestens eine Ausgangsöffnung (133A) für das Hindurcherstrecken des anschwellenden Materials (110) in das Einbaugehäuse (200), wenn das anschwellende Material (110) der Hitze ausgesetzt ist, aufweist.

2. Brandschutzzubehör (10) gemäß Anspruch 1, bei dem sich die Rückhaltemittel (120) beiderseits jeder Ausgangsöffnung (133A) aus der Hülle (130) hervorstehend erstrecken.

3. Brandschutzzubehör (10) gemäß einem der Ansprüche 1 und 2, bei dem die Hülle (130) als Umhüllung mit einer einzigen Ausgangsöffnung (133A) gestaltet ist.

4. Brandschutzzubehör (10) gemäß Anspruch 3, bei dem die Rückhaltemittel (120) einen die Ausgangsöffnung (133A) umgebenden Rückhaltekragen (121) aufweisen.

5. Brandschutzzubehör (10) gemäß einem der Ansprüche 1 bis 4, bei dem das anschwellende Material (110) in Form eines Blatts oder eines aufgerollten Bands in der Hülle (130) vorliegt.

6. Brandschutzzubehör (10) gemäß einem der Ansprüche 1 bis 4, bei dem das anschwellende Material (110) in die Hülle (130) eingegossen ist.

7. Brandschutzzubehör (10) gemäß einem der Ansprüche 1 bis 6, bei dem das anschwellende Material (110) nur einen Teil des inneren Volumens der Hülle (130) ausfüllt, um einen Stauraum zu schaffen.

8. Brandschutzzubehör (10) gemäß einem der vorangehenden Ansprüche, bei dem die Hülle (130) aus anschwellendem Material gefertigt ist.

9. Brandschutzzubehör (10) gemäß einem der vorangehenden Ansprüche, bei dem vorgesehen ist, daß das längliche Element (100) an dem Einbaugehäuse (200) so befestigt wird, daß mehr als 90% des Volumens des anschwellenden Materials (110) außerhalb des Einbaugehäuses (200) angeordnet sind.

10. Brandschutzzubehör (10) gemäß einem der vorangehenden Ansprüche, bei dem sich das längliche Element (100) geradlinig oder gekrümmt erstreckt.

11. Brandschutzzubehör (10) gemäß einem der vorangehenden Ansprüche, bei dem das längliche Element (100) einen länglichen Abschnitt (131) aufweist, der eine rohrförmige gedrehte Form hat.

12. Brandschutzanordnung (10) einer Installation eines elektrischen Geräts mit:
- einem Einbaugehäuse (200) mit einer Wand (211, 21), die ein inneres Volumen (201) des Einbaugehäuses (200) begrenzt, wobei die Wand (201) mindestens eine Durchgangsöffnung (240) für einen elektrischen Kabelschlauch aufweist, und
- einem in der Durchgangsöffnung (240) aufgenommenen Brandschutzzubehör (10) gemäß einem der Ansprüche 1 bis 11.

## Claims

1. Fire-protection accessory (10) for a flush-mounted box (200), comprising an elongate element (100) provided with an intumescent material (110), the elongate element (100) being adapted to be slid through an electrical-conduit passage opening (240) in the flush-mounted box (200) and comprising retaining means (120) adapted to cooperate with an internal part of the flush-mounted box (200) in order to fasten the elongate element (100) to the flush-mounted box (200) in such a way that the elongate element (100) extends mainly outside thereof,
the elongate element (100) comprising a hollow case (130) carrying the retaining means (120),
wherein the hollow case (130) houses the intumescent material (110), the case (130) having at least one outlet opening (133A) for the intumescent material (110) to pass through towards the flush-mounted box (200) when the intumescent material (110) is exposed to heat.

2. Fire-protection accessory (10) according to claim 1, wherein the retaining means (120) project from the case (130) on the side of each outlet opening (133A).

3. Fire-protection accessory (10) according to any one of claims 1 and 2, wherein the case (130) is in the form of a sheath having a single outlet opening (133A).

4. Fire-protection accessory (10) according to claim 3, wherein the retaining means (120) comprise a stop collar (121) bordering said outlet opening (133A).

5. Fire-protection accessory (10) according to any one of claims 1 to 4, wherein the intumescent material (110) is in the form of a rolled sheet or strip that is housed in the case (130).

6. Fire-protection accessory (10) according to any one of claims 1 to 4, wherein the intumescent material (110) is moulded into the case (130).

7. Fire-protection accessory (10) according to any one of claims 1 to 6, wherein the intumescent material (110) only occupies a portion of the internal volume of the case (130) so as to provide a storage space.

8. Fire-protection accessory (10) according to any one of the preceding claims, wherein the case (130) is made of intumescent material (110).

9. Fire-protection accessory (10) according to any one of the preceding claims, wherein it is provided that the elongate element (100) is fastened to the flush-mounted box (200) such that more than 90% of the volume of the intumescent material (110) is positioned outside the flush-mounted box (200).

10. Fire-protection accessory (10) according to any one of the preceding claims, wherein the elongate element (100) extends rectilinearly or in a curved manner.

11. Fire-protection accessory (10) according to any one of the preceding claims, wherein the elongate element (100) comprises a longitudinal portion (131) having a tubular shape of revolution.

12. Fire-protection assembly (10) for installing electrical equipment, comprising:
- a flush-mounted box (200) comprising a wall (211, 212) that delimits an internal volume (201) of the flush-mounted box (200), the wall (211, 212) having at least one electrical-conduit passage opening (240), and
- a fire-protection accessory (10) according to any of claims 1 to 11 received in the passage opening (240).
